# EUROPEAN PATENT SPECIFICATION

(11) **EP 0 402 694 B1**
(45) Date of publication and mention of the grant of the patent: **22.02.1995**
(21) Application number: 90110177.4
(22) Date of filing: 29.05.1990
(51) Int. Cl.: B29C 51/22, B29C 51/32, B29C 51/44

(54) **Cutting device in a rotary type thermoforming apparatus, for having transverse partial cuts made in thermoplastic material webs**
Schneidevorrichtung in einer rotierenden Thermoformmaschine zum Anbringen von querlaufenden Teilschnitten in Kunststoffolien
Dispositif de coupe, dans une machine rotative de thermoformage, pour faire des coupes transversales partielles dans des feuilles en matière thermoplastique

(30) Priority: 14.06.1989 IT 1251989
(43) Date of publication of application: 19.12.1990
(73) Proprietor: NESPAK S.p.A. Società Generale per L'Imballaggio, I-48024 Massa Lombarda (IT)
(72) Inventor: Boncompagni, Cesare, I-40026 Imola (IT)
(74) Representative: Porsia, Bruno

(56) References cited:
- FR-A- 1 583 850
- US-A- 2 472 440
- US-A- 2 888 787
- US-A- 3 539 422
- US-A- 3 771 938

## Description

This invention relates to a continuous thermoforming apparatus comprising a horizontal shaft polyhedron rotary drum, with concave suction molds being carried on its peripheral sides, and with a continuous thermoplastic web being led around the said drum. The said web covers the molds, and by its longitudinal side edges is pressed by, for example, continuous chains against respective annular zones of this drum.

The said drum is fitted with stationary heating means extending over a portion of its periphery, and a distributor is provided for connecting the molds to a suction source, when the molds are about to leave the heating means, whereby respective sections of the softened thermoplastic web are sucked into the said molds. The distributor is then caused to connect the molds with the atmosphere, so that the thermoformed web can be extracted from the molds.

The continuous thermoplastic web which is thermoformed by a rotary thermoforming apparatus of the type as disclosed at the outset and known from the document FR-A-1 583 850, has to be subjected to cutting operations, more precisely, to a trimming operation along both of its longitudinal sides, to remove the two longitudinal side strips being engaged by the web-holding chain means in the thermoforming apparatus, and being generally deformed by these means, as well as to cutting operations to separate from each other by transverse cuts the termoformed continuous web sections constituting each one single article, of a size which may correspond to one or more molds on the drum, or to a fraction of a mold.

Thanks to suitable means being used, the operations of transversely cutting the thermoformed web are carried out at regular intervals when the thermoformed web still is on the drum, and these transverse cuts are partial cuts, in that the same do not extend to either side edges of the thermoformed web. The longitudinal cuts which intersect the transverse cuts, are made in the thermoformed web when this web has been delivered from the drum.

This invention relates particularly to the means for transversely cutting the thermoformed web, that now consist of a suitably directed stationary blade which is associated with a counterblade fitted on one corner of the rotary drum of the thermoforming apparatus. Such blade and counterblade means are liable to be quickly worn out, their upkeep is rather complicated, and an anomalous stress is exerted by the said means on the rotary drum of the thermoforming apparatus; moreover, the said means are very noisy.

The invention aims to obviate to these and other inconveniences by the provision of cutting means in the rotary drum of the thermoforming apparatus, which comprise a pointed, preferably double-acting blade that normally does not affect the thermoformed web, and when this blade is in its cycle-starting position, the same has its pointed end located near to the outward side of this drum. Upon control, the said blade is moved radially outwardly, and by its pointed end is driven into the thermoformed web, and it is then translated to the opposite side of the drum, whereby a transverse partial cut in the thermoformed web is thus made as required. On completion of such a blade travel, the web-cutting blade is moved radially inwardly and is kept at standstill, to be again operated upon control, so as to be caused to make the successive partial cut in the thermoformed web, which is made by the web-cutting blade being again moved radially outwardly and being again translated to the said opposite side of the drum. Otherwise, the radially inwardly moved web-cutting blade is directly returned into its starting position, in which the same is kept at standstill, ready for being imparted a subsequent control, causing the same to make the successive cut always by a unidirectional translatory movement. The servo controls for the web-cutting blade to be moved radially outwardly and radially inwardly, and to be translated, are of the pneumatic type, and are operated by means of a rotary distributor fitted on the shaft of the rotary drum of the thermoforming apparatus, and by means of suitable solenoid valves.

Further features of the invention, and the advantages arising therefrom will clearly appear in the following specification of one preferred embodiment thereof, which is shown merely by way of a non-limiting example in the Figures of the annexed one sheet of drawing, in which:
Figure 1 is a diagrammatic side elevational view showing a thermoforming apparatus of known type.
Figure 2 is a side elevational view showing the thermoforming drum of the thermoforming apparatus, which is provided with means according to the invention, for transversely cutting the thermoformed web.
Figures 3 and 4 respectively are a side elevational view and a front elevational view of the movable blade-carrying means in the cutting means according to the invention.

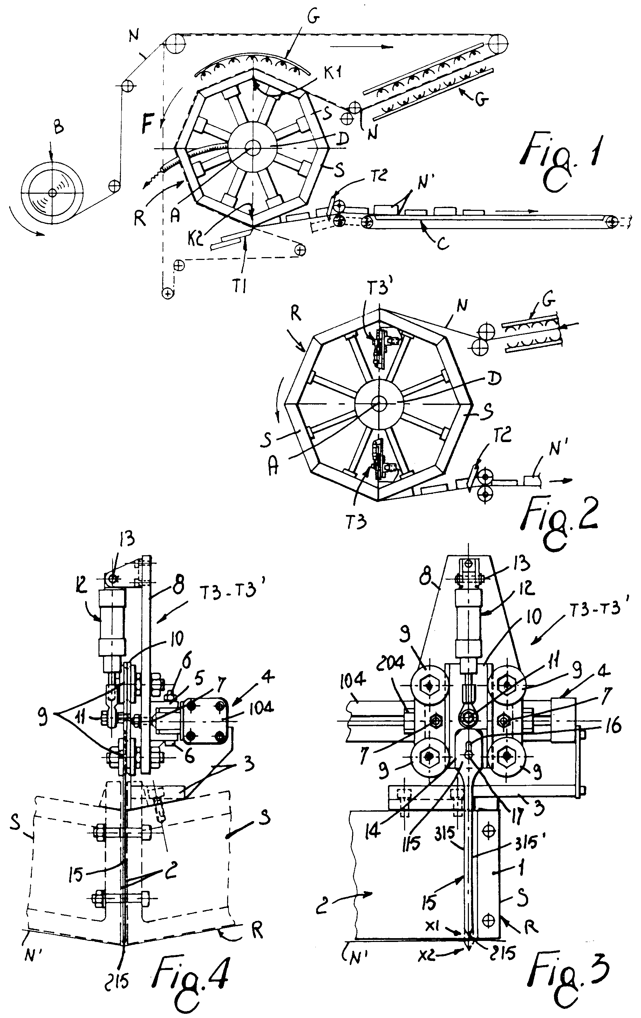

In Figure 1, reference R denotes the polyhedron drum fitted with the thermoplastic web-thermoforming molds S, which is driven in rotation around its horizontal axis, in the direction of arrow F. Reference T1 denotes the suitably directed stationary blade which is presently used for having partial transverse cuts made in a thermoformed web N' lying still on the drum, by causing the said blade T1 to act on counterblades arranged on the corners of drum R. Reference T2 denotes one of the stationary means by which longitudinal cuts are made, to remove the side strips of the thermoformed web N', which longitudinal cuts intersect the transverse cuts, so that web sections of a predetermined length are separated from the thermoformed web N'.

Experience proved that the thermoformed web lengths being delivered from the drum R can be handled with lesser inconveniences if the same are of a relatively limited length, so that the cutting means T1 are now operated every half turn of the rotating drum R, and are caused to cooperate with counterblades arranged at the opposite corners K1 and K2 of said drum R.

Still in Figure 1, reference G denotes the means for heating the thermoplastic web N being unwound from bobbin B, and reference C denotes the conveyor means that check the lengths of the thermoformed web N' having been delivered from the rotating drum R. Reference D denotes the rotary distributor through which suction is applied to the molds S.

Referring to Figure 2, there is seen that according to the invention, the blade T1 for transversely cutting the thermoplastic web N is eliminated, the counterblades on the corners K1, K2 of the polyhedron drum R are eliminated, and at the said corners K1, K2 the molds S are interconnected only by their facing end sides that are suitably shimmed as at 1 in Figure 3, so that the said drum is formed at these corners K1 and K2 with a respective transverse slot 2, through and along which the cutting blade 15 of the relative one of the two novel cutting devices T3, T3' is allowed to work. The said two cutting devices T3 T3' are now fitted on the polyhedrous drum R, each one of them at the respective corner K1, K2, and such an arrangement is provided on account of the above stated reasons, that induce to have the transverse partial cuts made at every half turn of drum R. Since the cutting devices T3, T3' are equal devices, only one of them will be described hereinafter.

Close to the transverse slot 2, which is associated with the blade 15 of the relative one of the two cutting devices T3, T3′, according to the invention, stirrups 3 arranged in the internal hollow space of drum R, are fastened to the inward sides of at least one of the molds S which by their facing end sides cooperatingly form the said slot 2. The said stirrups 3 are adapted for supporting by their ends, and parallelly to the slot 2, the straight body 104 of a known actuator 4 for imparting a rectilinear to-and-fro motion. The body 104 has a channel-shaped profile and serves as guide to a small carriage 204 which is connected to a double-acting pneumatic jack for driving this carriage 204, and to a belts-and-pulley unit for multiplying the stroke of the moving element of said jack, the carriage 204 and its pneumatic jack being both located inside the said body 104. By the jack of actuator 4 being operated in either directions, the carriage 204 is moved from the one to the other end of the respective slot 2, and vice-versa. Compressed air is fed to the jack of actuator 4 by means of a not shown rotary coupling fitted on the shaft A of drum R, just as the distributor D for supplying vacuum to the molds S, is. By suitable valve means, suitable abutment members, and may be sensors fitted on the drum R, the feeding of said jack is controlled for at least one travel of carriage 204 to be performed each time that one of the two cutting devices T3, T3′ is about to leave the position between the hours 8 and 6 of the ideal face-clock of drum R.

Referring to Figures 3 and 4, there is shown that an upstanding plate 8 with its free end being suitably tapered, is secured to the carriage 204 by means of a bracket 5 and screws 6, 7. Mounted on the said plate 8 are four grooved idle wheels 9 which are arranged at the corners of an ideal square or rectangle, and slidably support a slide 10 which is connected at 11 to the stem of a small single-acting or double-acting pneumatic jack 12 having its body anchored at 13 to the tapered end of said plate 8.

The end side of slide 10 which is directed toward the drum R, has its exposed face formed with a rectangular housing 14, in which the mating head 115 of a web-cutting blade is housed with a close fit. The said blade 15 is received in the respective transverse slot 2, and is formed with a pointed end 215, and preferably with a sharp edge on both of its sides 315 and 315′. When the stem of jack 12 is in its rectracted position, the web-cutting blade 15 is in the position X1 shown by solid lines in Figure 3, in which its pointed end 215 does not protrude from the slot 2. Whereas, when the stem of jack 12 is extended, the blade 15 is radially moved into the position X2 shown by dash lines in Figure 3, so that its pointed end 215 is caused to protrude by a suitable extent from the end of slot 2 which opens into the outward side of drum R.

Still in Figure 3 there is shown that the head 115 of the web-cutting blade 15 is longitudinally provided with a slot 16 through which the screw 17 for fixing in working position the said blade, is passed. This slot allows to fix the web-cutting blade 15 in different operative positions, so that this blade will gradually act on the thermoformed web N′ to be cut with different sections of its sharp side edges 315, 315′, as the being used sharp side edge sections of the same comes to be worn out. According to a modified embodiment of the invention, such a cutting action of gradually different sections of the blade sharp side edges 315, 315′ on the thermoformed web N′, can be achieved by the provision of means for checking the limit of the forward stroke of the stem of jack 12, or the relative movement of slide 10, in a manner which is conceivable and easily practicable by those skilled in the art.

The jack 12 is fed by means of the same rotary distributor D that feeds the jack of actuator 4, through an offtake to the said jack 12 or an interposed sequence valve, so that the jack of actuator 4 will be fed only after the stem of jack 12 having been extended to the limit of its forward stroke. Also the constructional details of the unit for operating the jack 12 are not shown in the drawings, since this unit can be easily made by those skilled in the art.

The operation of the cutting device T3, T3′ according to the invention, is simple and apparent.

Before the thermoformed web N′ being allowed to leave the molds S on the polyhedron drum R, the double-acting blade 15 of the relative cutting device T3, T3′ is upon control moved from the position X1 to the position X2, so that its pointed end 215 is caused to protrude by a suitable extent from the outward end of the respective slot 2, and is driven into the thermoformed web N′. The said blade 15 is then translated from the outward to the inward end of its slot 2, whereby a transverse partial cut in the thermoformed web N′ is thus made. On completion of such a travel of the web-cutting blade 15, the same is moved radially inwardly into the position X1, where the said blade is kept at standstill, to be again operated upon control, after a 360° rotation of drum R, so as to be caused to make the successive partial cut in the thermoformed web N′, which is made by the web-cutting blade being again moved radially outwardly and being again translated to the outward side of drum R. Thus, the web-cutting blade 15 will alternately act on the thermofomed web N′, at first with the one and then with the other of its sharp side edges 315, 315′. Otherwise, the radiadly inwardly moved blade 15 may be directly returned into the position X2, so that the same will be caused to perform its operative travel always by a unidirectional translatory movement. In this latter case, the cutting blade 15 may be given a suitable inclination relative to the thermoformed web N′ to be cut, and once one of its sharp side edges 315 or 315′ comes to be worn out, the said blade can be turned so as to cause its other sharp side edge to become operative.

## Claims

1. Thermoforming apparatus, comprising a rotatable polyhedron drum (R), thermoforming molds (S) and a cutting device, characterized in that the said cutting device (T3, T3') is associated in each drum region where such cuts are to be made, with a respective straight slot (2) that is parallel to the shaft (A) driving the drum (R) in rotation, and is preferably formed at one of said drum corners at which the facing end sides of two thermoforming molds (S) are closely secured, the said molds (S) being all mounted in an abutting relation on the peripheral sides of the polyhedron drum (R), and a web-cutting blade (15) of the relative cutting device (T3, T3') is slidably received in its respective slot (2), with its pointed end (215) lying near to one end of said slot, and the said blade (15) is connected to any suitable means for supporting and driving the same, which are located in the internal hollow space of drum (R), and by which the web-cutting blade (15) is upon control radially moved outwardly into the position (X2), so that the same is caused to protrude by its pointed end (215) from the outward end of its slot (2), and is driven into the thermoformed web (N'), whereupon the said blade (15) is translated to the other end of said slot (2), whereby a transverse partial cut is thus made in the thermoformed web (N'), the web-cutting blade (15) being then moved again radially inwardly into the position (X1), in which the said blade is drawn away from the thermoformed web (N').

2. Apparatus according to Claim 1, characterized in that the said cutting device (T3, T3') is provided with means for directly returning the web-cutting blade (15) into its starting position (X1), as soon as a transverse partial cut has been made by the said blade (15) in the thermoformed web (N'), so that the web-cutting blade (15) is caused to make transverse partial cuts in the thermoformed web (N') while being always unidirectionally translated from the outward to the inward end of the respective slot (2), in which the said blade is received.

3. Apparatus according to Claim 2, in which both of the side edges (315, 315') of the web-cutting blade (15) are sharp edges, so that when its one sharp side edge (315 or 315') is worn out, the said blade will be turned so as to cause its other sharp side edge to become operative.

4. Apparatus according to Claim 1, in which both of the side edges (315, 315') of the cutting blade (15) are sharp edges, and means are provided for the web-cutting blade (15) to be caused to make transverse partial cuts in the thermoformed web (N'), both while being moved radially outwardly, and while being subsequently moved radially inwardly, along and within the slot (2) in which the same is received.

5. Apparatus according to any one or more of the preceding Claims, in which means are provided for adjusting the depth position of the web-cutting blade (15) and/or the extent of the stroke of the stem of jack (12), by which the web-cutting blade (15) is driven into the thermoformed web (N') to be cut, so that successive different sections of the blade sharp side edges (315, 315') will be involved in the operation of transversely cutting the thermoformed web (N').

6. Apparatus according to any one or more of the preceding Claims, in which the means for supporting and driving the web-cutting blade (15) comprise a unit (4) for imparting a rectilinear to-and-fro motion, which is fixed in position in the internal hollow space of drum (R) of the thermoforming apparatus, in parallel relation with the slot (2) in which the said blade (15) is received, and which includes a carriage (204), with guide means (8,9) being fitted thereon and carrying a slide (10), on which the said blade is mounted in a preferably adjustable and easily replaceable manner, and respective pneumatic jacks are provided for driving the said slide (10) and the said carriage (204), which are operated by means of a rotary distributor (D) arranged on the shaft (A) driving the drum (R) of the thermoforming apparatus in rotation, and by possible valve means.

7. Apparatus according to the preceding Claims, characterized in that the said cutting device (T3, T3') is located in two diametrically opposite corners (K1 and K2) of the polyhedron drum (R) of the thermoforming apparatus, whereby transverse partial cuts are made in the thermoformed web (N') at every half turn of the said drum (R).

## Patentansprüche

1. Thermoformmaschine, enthaltend eine drehbare Polyedertrommel (R), Thermoform-Formen (S) und eine Schneideinrichtung, dadurch gekennzeichnet, daß diese Schneideinrichtung (T3, T3') in jedem Trommelabschnitt, in dem solche Schnitte durchgeführt werden sollen, einem entsprechenden geraden Schlitz (2) zugeordnet ist, der parallel zu der die Trommel (R) in Drehung setzenden Welle (A) liegt und vorzugsweise an einer dieser Trommelecken angebracht ist, an der die sich gegenüberliegenden Endseiten von zwei Thermoform-Formen (S) dicht aneinander befestigt sind, daß diese Formen (S) alle gegeneinander anliegend an den peripheren Seiten der Polyedertrommel (R) angeordnet sind und ein Bahnschneidmesser (15) der jeweiligen Schneideinrichtung (T3, T3') mit seinem geschärften Ende (215) nahe zu einem Ende dieses Schlitzes liegend gleitend in seinem jeweiligen Schlitz (2) aufgenommen ist, daß dieses Schneidmesser (15) zu seiner Halterung und zu seinem Antrieb an irgendeiner geeigneten Vorrichtung angeschlossen ist, die in dem Innenhohlraum der Trommel (R) untergebracht ist und von der das Bahnschneidmesser (15) kontrolliert radial nach außen in die Position (X2) bewegbar ist, derart, daß es dazu gebracht wird, mit seinem geschärften Ende (215) aus dem äußeren Ende seines Schlitzes (2) herauszustehen und in die thermoverformte Bahn (N') einzudringen, woraufhin dieses Messer (15) zu dem anderen Ende dieses Schlitzes verschoben wird, wodurch ein querverlaufender Teilschnitt in der thermoverformten Bahn (N) erzeugt wird, und daß das Bahnschneidmesser (15) dann radial nach innen in die Position (X1) bewegt wird, in der dieses Messer von der thermoverformten Bahn (N') weggezogen ist.

2. Maschine nach Anspruch 1, dadurch gekennzeichnet, daß diese Schneideinrichtung (T3, T3') mit Mitteln versehen ist, um das Bahnschneidmesser (15) direkt in seine Ausgangsposition (X1) zurückzubewegen, sobald ein querverlaufender Teilschnitt von diesem Messer (15) in der thermoverformten Bahn (N') gemacht worden ist, so daß das Bahnschneidmesser (15) dazu gebracht wird, querverlaufende Teilschnitte in der thermoverformten Bahn (N') zu erzeugen, während es stets in einer Richtung von dem äußeren zu dem inneren Ende des jeweiligen Schlitzes (2), indem dieses Messer aufgenommen ist, verschoben wird.

3. Maschine nach Anspruch 2, bei der beide der Seitenkanten (315, 315') des Bahnschneidmessers (15) scharfe Kanten sind, so daß, wenn seine eine scharfe Seitenkante (315 oder 315') abgenutzt ist, dieses Messer gedreht werden kann, um zu bewirken, daß seine andere scharfe Seitenkante betriebsbereit wird.

4. Maschine nach Anspruch 1, bei der beide Seitenkanten (315, 315') des Schneidmessers (15) scharfe Kanten sind, wobei Mittel vorgesehen sind, die bewirken, daß das Bahnschneidmesser (15) querverlaufende Teilschnitte in der thermoverformten Bahn (N') erzeugt, während beide radial nach außen bewegt werden, und wobei beide anschließend radial nach innen entlang und innerhalb des Schlitzes (2) bewegt werden, in dem es aufgenommen ist.

5. Maschine nach einem oder mehreren der vorhergehenden Ansprüche, bei der Mittel vorgesehen sind, um die Tiefenstellung des Bahnschneidemessers (15) und/oder das Ausmaß des Hubes der Stange der Hubvorrichtung (12) einzustellen, mittels welcher das Bahnschneidmesser (15) in die zu schneidende, thermoverformte Bahn (N') eingetrieben wird, so daß aufeinanderfolgende unterschiedliche Abschnitte der scharfen Messerseitenkanten (315, 315') in den Betrieb des Querschneidens der thermoverformten Bahn (N') einbezogen werden.

6. Maschine nach einem oder mehreren der vorhergehenden Ansprüche, bei der die Mittel zur Halterung und zum Antrieb des Bahnschneidmessers (15) eine Einheit (4) zur Erzeugung einer gradlinien Hin- und Herbewegung umfassen, die in Innenhohlraum der Trommel (R) der Thermoformmaschine in paralleler Zuordnung zu dem Schlitz (2), in dem dieses Messer (15) aufgenommen ist, befestigt ist, und die einen Schlitten (204) enthält, an dem Führungsmittel (8, 9) angebracht sind und der einen Schieber (10) trägt, an dem dieses Messer in einer vorzugsweise einstellbaren und leicht austauschbaren Weise angebracht ist, wobei zum Antrieb dieses Schiebers (10) und zum Antrieb dieses Schlittens (204) jeweilige pneumatische Hubvorrichtungen vorgesehen sind, die mittels eines Drehverteilers (D), der auf der die Trommel (R) der Thermoformmaschine in Drehung versetzenden Welle (A) angeordnet ist, und durch eventuelle Ventileinrichtungen betätigt werden.

7. Maschine nach den vorhergehenden Ansprüchen, dadurch gekennzeichnet, daß diese Schneideinrichtung (T3, T3') an zwei diametral gegenüberliegenden Ecken (K1, K2) der Polyedertrommel (R) der Thermoformmaschine angeordnet ist, wodurch bei jeder Halbdrehung dieser Trommel (R) querverlaufende Teilschnitte in der thermoverformten Bahn (N') gemacht werden.

## Revendications

1. Machine de thermoformage, comprenant un tambour polyèdre rotatif (R), des moules de thermoformage (S) et un dispositif de coupe, caractérisée en ce que ledit dispositif de coupe (T3, T3') est associé, dans chaque région du tambour où de telles coupes doivent être faites, à une fente droite respective (2) qui est parallèle à l'arbre (A) entraînant le tambour (R) en rotation, et est de préférence formée au niveau de l'un des coins dudit tambour au niveau duquel les côtés d'extrémité se faisant face de deux moules de thermoformage (S) sont fixés de manière rapprochée, lesdits moules (S) étant tous montés en relation attenante sur les côtés périphériques du tambour polyèdre (R), et une lame de coupe de feuille (15) du dispositif de coupe correspondant (T3, T3') est reçue de manière coulissante dans sa fente respective (2), avec son extrémité effilée (215) reposant près d'une première extrémité de ladite fente, et ladite lame (15) est connectée à tout moyen quelconque convenable pour supporter et entraîner celle-ci, qui sont situés dans l'espace creux interne du tambour (R), et par lesquels la lame de coupe de feuille (15) est, sous l'effet d'une commande, déplacée radialement en direction de l'extérieur à la position (X2), de sorte que celle-ci est amenée à dépasser de son extrémité effilée (215) l'extrémité extérieure de sa fente (2), et est entraînée dans la feuille thermoformée (N'), après quoi ladite lame (15) est amenée par translation à l'autre extrémité de ladite fente (2), d'où il résulte qu'une coupe transversale partielle est ainsi faite dans la feuille thermoformée (N'), la lame de coupe de feuille (15) étant ensuite déplacée de nouveau radialement en direction de l'intérieur à la position (X1), dans laquelle ladite lame est retirée de la feuille thermoformée (N').

2. Machine selon la revendication 1, caractérisée en ce que ledit dispositif de coupe (T3, T3') est prévu avec des moyens pour ramener directement la lame de coupe de feuille (15) à sa position de départ (X1), dès qu'une coupe transversale partielle a été faite par ladite lame (15) dans la feuille thermoformée (N'), de sorte que la lame de coupe de feuille (15) est amenée à faire des coupes transversales partielles dans la feuille thermoformée (N') pendant qu'elle est amenée par translation toujours unidirectionnelle de l'extrémité extérieure à l'extrémité intérieure de la fente respective (2), dans laquelle ladite lame est reçue.

3. Machine selon la revendication 2, dans laquelle les arêtes latérales (315, 315') de la lame de coupe de feuille (15) sont toutes deux des arêtes aiguisées, de sorte que lorsque sa première arête latérale aiguisée (315 ou 315') est émoussée, ladite lame sera tournée de manière à amener son autre arête latérale aiguisée à devenir active.

4. Machine selon la revendication 1, dans laquelle les arêtes latérales (315, 315') de la lame de coupe (15) sont toutes deux des arêtes aiguisées, et des moyens sont prévus pour que la lame de coupe de feuille (15) soit amenée à faire des coupes transversales partielles dans la feuille thermoformée (N'), à la fois pendant qu'elle est déplacée radialement vers l'extérieur et pendant qu'elle est ensuite déplacée radialement vers l'intérieur, le long et à l'intérieur de la fente (2) dans laquelle elle est reçue.

5. Machine selon l'une quelconque ou plusieurs des revendications précédentes, dans laquelle des moyens sont prévus pour régler la position de profondeur de la lame de coupe de feuille (15) et/ou l'étendue de la course de la tige de vérin (12), par laquelle la lame de coupe de feuille (15) est enfoncée dans la feuille thermoformée (N') à découper, de sorte que des sections différentes successives des arêtes latérales aiguisées de la lame (315, 315') seront engagées dans l'opération de coupe transversale de la feuille thermoformée (N').

6. Machine selon l'une quelconque ou plusieurs des revendications précédentes, dans laquelle les moyens pour supporter et entraîner la lame de coupe de feuille (15) comprennent une unité (4) pour communiquer un mouvement rectilinéaire de va-et-vient, qui est fixée en position dans l'espace creux interne du tambour (R) de la machine de thermoformage, en relation parallèle avec la fente (2) dans laquelle ladite lame (15) est reçue, et qui comprend un chariot (204), avec des moyens de guide (8, 9) étant fixés sur celui-ci et transportant une coulisse (10), sur laquelle ladite lame est montée d'une manière de préférence réglable et facilement remplaçable, et des vérins pneumatiques respectifs sont prévus pour entraîner ladite coulisse (10) et ledit chariot (204), qui sont actionnés au moyen d'un distributeur rotatif (D) disposé sur l'arbre (A) entraînant le tambour (R) de la machine de thermoformage en rotation, et par d'éventuels moyens de soupape.

7. Machine selon les revendications précédentes, caractérisée en ce que ledit dispositif de coupe (T3, T3') est situé dans deux coins diamétralement opposés (K1 et K2) du tambour polyèdre (R) de la machine de thermoformage, d'où il résulte que des coupes transversales partielles sont faites dans la feuille thermoformée (N') à chaque demi-tour dudit tambour (R).
